# EUROPEAN PATENT SPECIFICATION

(11) **EP 2 886 828 B1**
(45) Date of publication and mention of the grant of the patent: **12.10.2016**
(21) Application number: 14197831.2
(22) Date of filing: 12.12.2014
(51) Int. Cl.: F02B 41/10, F16H 63/50

(54) **Improved turbocompound system**
Verbessertes Turbocompoundsystem
Système à turborécupération amélioré

(30) Priority: 20.12.2013 IT MI20132166
(43) Date of publication of application: 24.06.2015
(73) Proprietor: FPT Industrial S.p.A., 10156 Torino (IT)
(72) Inventor: D'Epiro, Clino, 10091 Alpignano (IT)
(74) Representative: Franzolin, Luigi

(56) References cited:
- EP-A1- 2 053 208
- WO-A1-2013/091669
- DE-A1-102004 062 492
- JP-A- S63 109 236
- US-A1- 2011 094 485

## Description

### Field of application of the invention

The present invention relates to the field of turbocompound systems, i.e. of systems in which a turbine fed with the exhaust gases of an internal combustion engine has the axis thereof connected to the vehicle transmission so as to cooperate with the internal combustion engine.

Such a turbine is normally named "power turbine" or "compound turbine".

### Known State of the art

The compound turbine of the known systems is often arranged upstream of the ATS (After Treatment System), i.e. of the exhaust gas purification devices, with the axis thereof connected to the driving shaft of the internal combustion engine by means of appropriate fixed gearings which allow to adapt the number of revolutions of the compound turbine to the number of revolutions of the driving shaft. A system where the compound turbine is arranged downstream of the ATS is known from EP 2 053 208 A.

Furthermore, the axis of the power turbine is generally associated with such gearings by means of a hydraulic coupling in order to damp the rotation irregularities of the driving shaft (torsional vibrations) which would damage the turbine.

The vehicles, above all the heavy vehicles, which implement turbocompound layouts are ever more frequently provided with automatic or dual-clutch automated gearboxes in order to reduce the torque transmission gaps to the wheels.

It is worth noting that all decelerations must then be recovered by burning additional fuel, and that shifting on a heavy vehicle may take even a few seconds.

### Summary of the invention

It is the object of the present invention to disclose a system for improving the transfer of torque to the wheels without needing to implement costly automatic or dual-clutch automated gearboxes.

The underlying principle of the present invention is that of connecting a power turbine to a shaft downstream of the gearbox, preferably the secondary shaft of the gearbox, preferably by means of an optional power takeoff, which is generally present in the gearboxes of industrial and commercial vehicles.

Preferably, the power turbine is of the variable geometry type arranged on the exhaust gas line.

Preferably, it is arranged downstream of the single ATS, i.e. downstream of the DOC/DPF/SCR for diesel engines and of the three-way catalyst for Otto cycle engines, so as to receive a constant, nearly entirely pulse-free, flow of exhaust gas.

Preferably, the internal combustion engine is controlled so as to increase the engine rpm when shifting so as to increase the fluid dynamic load on the power turbine.

Preferably, when the power turbine is of the variable geometry type, it is controlled so as to draw the highest amount of energy as possible from the exhaust gases when shifting to provide an appropriate torque to the wheels and eliminate traction gaps.

The internal combustion engine may be of any type.

According to a further preferred embodiment of the invention, when the engine is a diesel cycle engine, the ATS may be provided with a secondary fuel injector, i.e. an injector arranged on the exhaust gas line to inject fuel during particulate filter regeneration. According to such a preferred variant of the invention, such an injector is used in cooperation with the power turbine also during other operating conditions of the propulsion system, i.e. to implement a Brayton cycle, i.e. exploiting the exhaust gas line of the internal combustion engine as active part of the vehicle mechanical energy generation. In other words, the exhaust line itself may be controlled so as to provide an overboost to the system, and thus to the vehicle.

According to another preferred variant of the invention, in which the power turbine is of the variable geometry type, the internal combustion engine and/or the variable geometry of the turbine and/or the fuel injector on the exhaust line may be controlled so as to increase the turbine load to provide torque to the wheels when shifting and, more in general, to provide an overboost to the system, and thus to the vehicle.

Advantageously, the fact of arranging the power downstream of the ATS allows to vary, in controllable manner, the permanence time of the gases in the ATS with pressure increments with respect to ambient pressure higher than 1 bar, allowing both a more rapid warm up and subsequently to improve ATS efficiency, to the extent that its size can be reduced while its capacity of treating equal flow rates of exhaust gas remains unchanged.

According to a further preferred variant of the invention, also the injection of urea-based aqueous solution may be controlled so as to cooperate with the power turbine thus defining an open Rankine cycle. Also in this case, if the power turbine is a variable geometry device, it may be controlled accordingly, obtaining an overboost. Advantageously, downstream of the SCR and upstream of the power turbine there may be a NH3 clean up catalyst, which generates heat from ammonia catalysis. Such a heat is thus recovered by the power turbine.

The power turbine may be connected to the secondary shaft of the gearbox by means of appropriate gearings or by means of a traditional hydraulic coupling.

Preferably, the power turbine is operatively connected to the secondary of the gearbox by means of a continuously variable ratio transmission, also named with the acronym CVT.

It is an object of the present invention an improved turbocompound system as described in claim 1.

It is also an object of the present invention a control method of the aforesaid turbocompound.

A further object of the present invention is a land vehicle implementing the aforesaid turbocompound system.

The claims describe preferred embodiments of the invention forming an integral part of the present description.

### Brief description of the figures

Further objects and advantages of the present invention will be apparent from the following detailed description of an embodiment (and variants) thereof and from the accompanying drawings provided merely by way of non-limitative example, in which:

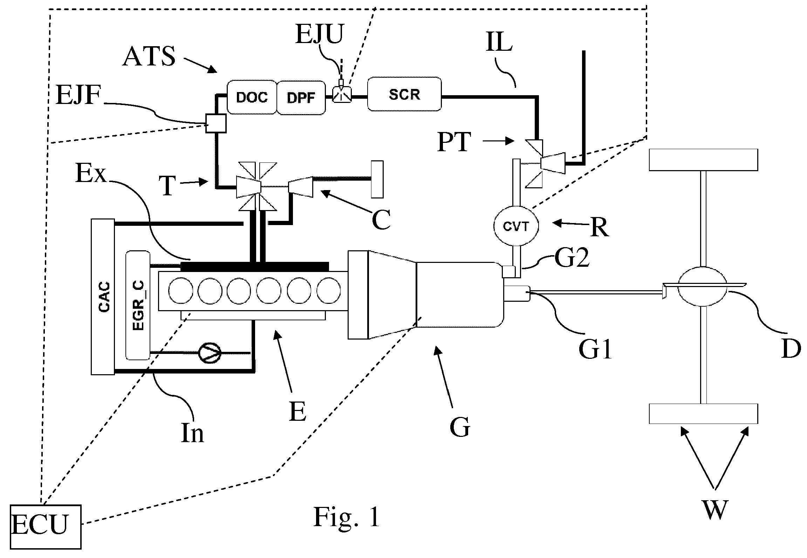

figure 1 shows an approximately diagram of the improved turbocompound system object of the present invention.

The same reference numbers and letters in the figures refer to the same elements or components.

### Detailed description of embodiments

According to figure 1, an internal combustion engine E, e.g. a diesel engine, has an intake manifold In and an exhaust manifold Ex. A turbosupercharger unit TC defines a first, possibly optional, supercharging stage of the internal combustion engine with the first turbine T operatively arranged immediately downstream of the exhaust manifold. The compressor C, guided by the first turbine T, aspirates fresh air from the environment and compresses it, while an intercooler CAC cools the compressed air down before it enters into the intake manifold In.

An exhaust gas recirculation system EGR may be implemented. Preferably, it is of the "high-pressure" type, known in itself, meaning that recirculation is operated by tapping exhaust gases upstream of the first turbine and by introducing such exhaust gases, preventively cooled, e.g. by means of the separate EGR Cooler, into the intake manifold In downstream of the compressor C.

A "low pressure" EGR circuit may also be implemented either in addition to, or instead of the high pressure one, with drawing upstream of the power turbine, cooling by means of a separate EGR Cooler and introduction into the air circuit upstream of the compressor C into the circuit, without disappearing of the operating and/or adjusting principle.

A second turbine PT, said power turbine, is arranged on the exhaust line IL, downstream of the first turbine T, if present, according to the exhaust gas flow.

Preferably, the power turbine PT is arranged on the exhaust gas line IL, downstream of the ATS, i.e. downstream of the DOC and of the SCR.

Preferably, a particulate filter is arranged downstream of the DOC and upstream of the SCR. EJU means are arranged immediately downstream of the SCR to inject a urea-based mixture for abating NOx in cooperation with the SCR.

According to the present invention, the axis of the power turbine is connected to the transmission downstream of the gearbox, i.e. preferably to the secondary shaft of the gearbox or to any transmission shaft arranged between the gearbox and the wheels.

According to a preferred variant of the invention, the internal combustion engine is controlled so as to increase the fluid dynamic load on the power turbine when shifting so as to eliminate traction gaps.

According to a further preferred variant of the invention, the power turbine is of the variable geometry type and may therefore be adjusted according to the torque required at the wheels, both when shifting and, more in general, as overboost for the entire system.

In particular, the reduction of the effusion section of the turbine distributor becomes directly proportional to the required power turbine torque.

So, if the internal combustion engine is controlled by the ECU to find a dynamic balance at a higher load because of the counterpressure generated by the power turbine, the engine produces a higher exhaust gas flow at higher temperature, and thus the effect of the power turbine is amplified, being able to provide the torque needed to maintain a constant speed to the vehicle while the clutch is detached and the gearbox operates the gear shift.

Such a control is rather easy to achieve if the gearbox is automatic or automated, it being possible to predict the shifting with sufficient advance and thus it being possible to control the fuel feed to the internal combustion engine accordingly.

According to a further preferred variant of the invention, the power turbine PT is operatively connected either directly or indirectly to the driving shaft of the internal combustion engine and is of the adjustable blade type. Thus, connection of the power turbine to the vehicle transmission means a connection to the driving shaft or to any other member involved in the transmission of motion to the wheels.

According to a further preferred variant of the invention, the power turbine can change its effusion section but also the angle of impact of the gas injected by the nozzles of the scroll with the blades of its impeller. Preferably, when the distributor of the turbine is of the adjustable blade type, its blades may be oriented so that the angle of impact of the gas on the blades of the impeller slows down the rotational motion of the impeller. The impeller cannot reverse its sense of rotation because it is constrained to the vehicle transmission, but this implies the transfer of torque from the power turbine to the vehicle transmission.

Thus, according to a preferred variant of the present invention, the power turbine can provide not only an overboost to the vehicle but also braking torque.

According to a further preferred embodiment of the invention, the fluid dynamic load on the power turbine may be increased not only by controlling the internal combustion engine but either also or alternatively by injecting urea-based aqueous solution and/or by means of post injections of fuel, e.g. by means of a specific injector arranged upstream of the ATS.

The urea-based aqueous solution evaporates completely at high temperature and is converted into ammonia in part, and consequently increases the mass flow rate and volumetry of the gas impacting on the power turbine. An open Rankine (or Hirn) cycle, i.e. without fluid recovery by means of condensation, is thus implemented, with the following transformations:
- pumping in the ATS upstream of the SCR, by means of said EJU injector,
- evaporation, because of the exhaust gas temperature,
- expansion through the power turbine.

The practice of injecting fuel, either as post injections or by means of a specific EJF injector housed directly in the exhaust gas line IL upstream of the DPF, is known in order to regenerate the particulate filter DPF.

According to a preferred variant of the invention, the fluid dynamic load of the power turbine may be controlled also by means of the addition of fuel, not to regenerate the DPF but to obtain further mechanical energy from the power turbine.

The exhaust gas portion related to the fuel injected by means of post injection evolves according to a transformation cycle comprising:
- a compression at pressure higher than ambient pressure (backpressure),
- a heating (post injected fuel oxidation) at constant pressure, and
- an expansion by means of the power turbine.

It is substantially a positive work Brayton cycle, which not only allows to obtain further mechanical energy on the power turbine but also improves DOC + DPF efficiency because reactions are triggered more easily at lower temperatures as the counterpressure increases.

At most, the forced regeneration procedures of the DPF are eliminated/reduced because the natural reactions are greatly facilitated. Furthermore, if the vehicle is provided with EGR, the average pressure increase on the exhaust line facilitates the exhaust gas recirculation.

The effects of both the ammonia expansion and of the fuel combustion injected by means of either post injections or a specific injector are appreciable above all in combination with a variable geometry power turbine, which raises the average pressure in the exhaust line over the entire curve of use of the engine, thus increasing the compression ratio at which the foregoing gaseous fractions both evolve. Advantageously, the efficiency of both the Rankine and Brayton cycles increases with the ratio between the maximum and minimum pressures to which the respective fluid evolves.

On the contrary, such a pressure ratio in absence of a variable geometry turbine becomes poorly appreciable in relation to the aforesaid purpose.

Therefore, the energy recovery by means of the power turbine may be controlled by means of the engine point of the internal combustion engine, by means of post injections of fuel, by injecting of urea-based aqueous solution, by adjusting the variable geometry of the power turbine, and by combinations thereof.

Advantageously, the fact of operating at pressures which are higher in average than those known, i.e. at pressure values in the order of 1-2 bar relative, allows to use, as power turbine, a centripetal turbine similar to the turbines of the turbosupercharger assembly T, C, instead of axial turbines with degree of reaction close to zero (impulse turbines).

According to the present invention, the power turbine is connected to the transmission downstream of the transmission. Preferably, it is connected to the secondary shaft of the gearbox G1, preferably by means of a power takeoff G2, generally available in the gearboxes of heavy vehicles.

Advantageously, from the energy point of view, the connection to an element of the power chain very close to the wheels of the vehicle, and thus not subject to the torsional vibrations which are specific to the driving shaft, allows to eliminate the hydraulic damper coupling, typically used for the power turbines of turbocompound systems. Indeed, such a coupling usually implies an energy loss equal to at least 15% of that recovered by the wheel of the power turbine.

According to the present invention, the power turbine PR is connected to the secondary shaft of the gearbox by means of gearings or by means of a continuously variable ratio transmission CVT and preferably without implementing a hydraulic coupling.

The implementation of a CVT allows to keep the peripheral speed of the power turbine always in the optimal U/C ratio range, i.e. effusion speed of the gas divided by the peripheral speed of the impeller, from which fluid dynamic efficiency of the turbine itself greatly depends.

Thus, by means of CVT it is always possible to maintain the power turbine at the operating speed in which it expresses the best efficiency. This allows an excellent thermodynamic energy recovery downstream of the ATS.

In addition to improving recovery efficiency, this has the effect of uncoupling the variable geometry management of the power turbine from the rotation speed of the power turbine without penalization. Thus the foregoing management procedures of the turbine when shifting or providing overboost may be carried out by maintaining the power turbine in maximum efficiency conditions.

By virtue of some variants of the present invention, the ATS becomes active part in torque generation, thus the power turbine, which is connected downstream of the ATS, has the shaft thereof connected to the transmission downstream of the gearbox, thus without needing to implement further shafts to transfer the motion from the turbine to the driving shaft, upstream of the gearbox, as normally the turbocompound are known to do.

Preferably, the secondary shaft G2 of the transmission is further connected to the drive wheels of the vehicle, e.g. by means of a differential D.

It is thus advantageous when shifting to
- control the internal combustion engine so as to increase the exhaust gas flow rate and temperature, and/or
- increase the injection of urea-based aqueous solution, and/or
- perform post injections of fuel to exploit the aforesaid Bryton cycle.

The forgoing control operations may be advantageously implemented in a processing unit ECU by means of a program for computer which comprises encoding means for implementing one or more steps of the method when this program is run on a computer. Therefore the scope of protection is intended to extend to said computer program and also to computer-readable means which comprise a recorded message, said computer-readable means comprising program encoding means for implementing one or more steps of the method, when said program is executed on a computer.

Other possible constructional variants of the described non-limitative example are possible, without therefore departing from the scope of protection of the present invention, comprising all the implementations considered equivalent by a person skilled in the art.

From the description above, a person skilled in the art will be able to implement the object of the invention without introducing further constructional details. The elements and features illustrated in the various embodiments may be combined without because of this departing from the scope of protection of the invention as defined by the appended claims.

## Claims

1. Improved turbocompound system, the system comprising
- an internal combustion engine (E) having an exhaust manifold (Ex) and an exhaust line (IL) connected to and adjacent with the exhaust manifold, the internal combustion engine being equipped with a gearbox having a secondary output shaft (G1),
- an exhaust gas purification system (ATS) arranged on said exhaust line (IL),
- a power turbine (PT), arranged on the exhaust line (IL) downstream of said purification system (ATS),
wherein the power turbine (PT) has a respective shaft connected with said secondary output shaft (G1), downstream of the gearbox for providing torque to the wheels and eliminate traction gaps when shifting.

2. System according to claim 1, further comprising processing means (ECU) configured to control said internal combustion engine (E), in order to increase a fluid dynamic load on said power turbine (PT) at least when said gearbox (G) is shifting and/or to cooperate with said internal combustion engine (E).

3. System according to one of the claims 1 and 2, wherein said purification system (ATS) comprises means (EJU) to inject an urea-based aqueous solution controlled by said processing means (ECU), and wherein said processing means are configured to increase a flow rate of urea-based aqueous solution injected in the ATS, in order to increase a fluid dynamic load on said power turbine (PT), performing an open Rankine cycle, at least when said gearbox (G) is shifting and/or to cooperate with said internal combustion engine (E).

4. System according to one of the claims 1 and 3, wherein said purification system (ATS) comprises means (EJF) to inject fuel controlled by said processing means (ECU), and wherein said processing means are configured to command a fuel injection in the (only) ATS, in order to increase a fluid dynamic load on said power turbine (PT), performing an open Bryton cycle, at least when said gearbox (G) is shifting and/or to cooperate with said internal combustion engine (E).

5. System according to one of the previous claims 1-4, wherein said power turbine (PT) has a variable geometry, controlled by said processing means (ECU), and wherein said processing means (ECU) are configured to reduce an effusion static section through the power turbine (PT) to increase a driving torque delivered to said secondary shaft (G1) of the gearbox (G).

6. System according to one of the claims 1-5, wherein said axis of the power turbine (PT) is operatively connected to the secondary propeller shaft of the gearbox (G1) by means of appropriate gearings or by means of a torque converter or a CVT gearbox controlled by said processing means (ECU).

7. System according to claim 6, wherein said power turbine is operatively connected to the secondary shaft of the gearbox (G1) by means of a CVT gearbox controlled by said processing means (ECU), said processing means are configured to control said CVT gearbox so that the speed of rotation of the turbine is such that its efficiency is optimal.

8. System according to any one of the preceding claims, wherein said exhaust gas purification system (ATS) comprises
- a particulate filter (DPF) and said means (EJF) for injecting fuel arranged upstream of said particulate filter and/or
- an SCR catalyst and said means (EJU) for injecting an urea-based aqueous solution arranged upstream of said SCR catalyst, and/or
- in a sequence, starting from said exhaust manifold, according to a direction of effusion of the exhaust gas:
- means (EJF) for injecting fuel,
- a DOC catalyst,
- a particulate filter (DPF),
- means (EJU) for injecting an urea-based aqueous solution,
- an SCR catalyst.

9. System according to any one of the preceding claims, wherein said internal combustion engine (E) is further provided with an intake manifold and with a turbosupercharger unit (T, C) having a first turbine (T) arranged downstream of the exhaust manifold (Ex) and upstream of said purification system (ATS).

10. System according to any one of the preceding claims, wherein said internal combustion engine (E) is further provided with EGR means and wherein said processing means (ECU) are adapted to control said power turbine in order to facilitate an exhaust gas recirculation.

11. System according to claim 10, wherein said EGR means are high-pressure or low-pressure.

12. System according to one of the preceding claims, wherein said gearbox (G) is automatic or automatable and/or wherein said power turbine (PT) is associated to said secondary gearbox shaft (G1) by means of a power takeoff (G2) of the gearbox.

13. System according to any one of the preceding claims 1 - 12, wherein a distributor of said power turbine has adjustable blades and wherein the blades can be adjusted so that an angle of impact of the exhaust gas on the turbine blades is such as to slow down the rotational motion of an impeller of the power turbine, transferring a braking torque to the vehicle transmission.

14. System according to claim 13, wherein said processing means (ECU) are configured to control the blade orientation so that the power turbine can generate negative torque during the warm up of the purification system (ATS) and/or in engine brake conditions.

15. Control method of an improved turbocompound system according to any one of the preceding claims, comprising the step of making the internal combustion engine find a dynamic balance at an higher load due to a counterpressure generated by the power turbine, amplifying the contribution of the power turbine at least during a gear shifting.

16. Method according to claim 15, wherein if the turbocompound system comprises fuel post-injection means (EJF), the method comprises the steps of
- commanding at least a fuel post-injection to increase a fluid dynamic load of the power turbine (PT), and
- reduce an effusion section of the power turbine (PT) accordingly,
in order to increase a mechanical power recovered by the power turbine (PT).

17. Method according to claim 15, wherein when the power turbine has adjustable blades, the control method comprising a step of adjusting an orientation of the blades so that the power turbine generates and transfers braking torque to the vehicle transmission during the warm up of the purification system (ATS) and/or in condition of engine brake.

18. Method according to any one of the preceding claims 15-17, wherein the turbocompound system comprises first means (EJU) for injecting an urea-based aqueous solution in said exhaust line and controlled by said processing means, then said processing means are adapted to
- command at least a variation of injection of an urea-based aqueous solution, and
- reduce an effusion section of the power turbine (PT) accordingly,
in order to increase a mechanical power recovered by the power turbine (PT).

19. Terrestrial vehicle comprising an improved turbo compound system according to any one of the claims from 1 to 14.

20. Computer program comprising program code means adapted to perform all the steps of any claim from 15 to 18, when such program is run on a computer.

21. Computer-readable means comprising a recorded program, said computer-readable means comprising program code means adapted to perform all the steps according to any claim from 15 to 18, when said program is run on a computer.

## Patentansprüche

1. Verbessertes Turboverbundsystem, wobei das System Folgendes umfasst:
- eine Brennkraftmaschine (E) mit einem Abgaskrümmer (Ex) und einer Abgasleitung (IL), die mit dem Abgaskrümmer verbunden ist und sich in dessen Nähe befindet, wobei die Brennkraftmaschine mit einem Getriebe ausgerüstet ist, das eine sekundäre Ausgangswelle (G1) besitzt,
- ein Abgasreinigungssystem (ATS), das an der Abgasleitung (IL) angeordnet ist,
- eine Leistungsturbine (PT), die an der Abgasleitung (IL) stromabseitig des Reinigungssystems (ATS) angeordnet ist,
wobei die Leistungsturbine (PT) eine entsprechende Welle hat, die mit der sekundären Ausgangswelle (G1) stromabseitig des Getriebes verbunden ist, um Drehmoment für die Räder bereitzustellen und um Traktionslücken während des Schaltens zu beseitigen.

2. System nach Anspruch 1, das ferner Verarbeitungsmittel (ECU) umfasst, die konfiguriert sind, die Brennkraftmaschine (E) zu steuern, um eine fluiddynamische Last auf die Leistungsturbine (PT) wenigstens dann zu erhöhen, wenn das Getriebe (G) schaltet, und/oder mit der Brennkraftmaschine (E) zusammenzuwirken.

3. System nach einem der Ansprüche 1 und 2, wobei das Reinigungssystem (ATS) Mittel (EJU) umfasst, um gesteuert durch die Verarbeitungsmittel (ECU) eine wässrige Lösung auf Harnstoffbasis einzuspritzen, wobei die Verarbeitungsmittel konfiguriert sind, eine Durchflussmenge einer wässrigen Lösung auf Harnstoffbasis, die in das ATS eingespritzt wird, zu erhöhen, um eine fluiddynamische Last auf die Leistungsturbine (PT), die einen offenen Clausius-Rankine-Prozess ausführt, wenigstens dann zu erhöhen, wenn das Getriebe (G) schaltet, und/oder mit der Brennkraftmaschine (E) zusammenzuwirken.

4. System nach einem der Ansprüche 1 und 3, wobei das Reinigungssystem (ATS) Mittel (EJF) umfasst, um gesteuert durch die Verarbeitungsmittel (ECU) Kraftstoff einzuspritzen, und wobei die Verarbeitungsmittel konfiguriert sind, eine Kraftstoffeinspritzung in das (einzige) ATS zu steuern, um eine fluiddynamische Last auf die Leistungsturbine (PT), die einen offenen Bryton-Prozess ausführt, wenigstens dann zu erhöhen, wenn das Getriebe (G) schaltet, und/oder mit der Brennkraftmaschine (E) zusammenzuwirken.

5. System nach einem der vorhergehenden Ansprüche 1-4, wobei die Leistungsturbine (PT) eine variable Geometrie hat, die durch die Verarbeitungsmittel (ECU) gesteuert wird, und wobei die Verarbeitungsmittel (ECU) konfiguriert sind, einen statischen Effusionsquerschnitt durch die Leistungsturbine (PT) zu vorringern, um ein Antriebsdrehmoment, das an die sekundäre Welle (G1) des Getriebes (G) geliefert wird, zu erhöhen.

6. System nach einem der Ansprüche 1-5, wobei die Achse der Leistungsturbine (PT) mit der sekundären Antriebswelle des Getriebes (G1) mittels geeigneter Zahnradsätze oder mittels eines Drehmomentwandlers oder eines CVT-Getriebes, das durch die Verarbeitungsmittel (ECU) gesteuert wird, betriebstechnisch verbunden ist.

7. System nach Anspruch 6, wobei die Leistungsturbine mit der sekundären Welle des Getriebes (G1) mittels eines CVT-Getriebes, das durch die Verarbeitungsmittel (ECU) gesteuert wird, betriebstechnisch verbunden ist, wobei die Verarbeitungsmittel konfiguriert sind, das CVT-Getriebe zu steuern, so dass die Drehzahl der Turbine derart ist, dass ihr Wirkungsgrad optimal ist.

8. System nach einem der vorhergehenden Ansprüche, wobei das Abgasreinigungssystem (ATS) Folgendes umfasst:
- einen Partikelfilter (DPF) und die Mittel (EJF) zum Einspritzen von Kraftstoff, die stromaufseitig des Partikelfilters angeordnet sind, und/oder
- einen SCR-Katalysator und die Mittel (EJU) zum Einspritzen einer wässrigen Lösung auf Harnstoffbasis, die stromaufseitig des SCR-Katalysators angeordnet sind, und/oder
- in einer Reihenfolge beginnend bei dem Abgaskrümmer in Richtung der Effusion des Abgases:
- Mittel (EJF) zum Einspritzen von Kraftstoff,
- einen DOC-Katalysator,
- einen Partikelfilter (DPF),
- Mittel (EJU) zum Einspritzen einer wässrigen Lösung auf Harnstoffbasis,
- einen SCR-Katalysator.

9. System nach einem der vorhergehenden Ansprüche, wobei die Brennkraftmaschine (E) ferner mit einem Einlasskrümmer und mit einer Turboladereinheit (T, C), die eine erste Turbine (T), die stromabseitig des Abgaskrümmers (Ex) und stromaufseitig des Reinigungssystems (ATS) angeordnet ist, besitzt, versehen ist.

10. System nach einem der vorhergehenden Ansprüche, wobei die Brennkraftmaschine (E) ferner mit AGR-Mitteln versehen ist und wobei die Verarbeitungsmittel (ECU) dafür ausgelegt sind, die Leistungsturbine zu steuern, um eine Abgasrückführung zu erleichtern.

11. System nach Anspruch 10, wobei die AGR-Mittel mit hohem Druck oder mit niedrigem Druck arbeiten.

12. System nach einem der vorhergehenden Ansprüche, wobei das Getriebe (G) auto-matisch oder automatisierbar ist und/oder wobei die Leistungsturbine (PT) der sekundären Getriebewelle (G1) mittels einer Leistungswegnahme (G2) des Getriebes zugeordnet wird.

13. System nach einem der vorhergehenden Ansprüche 1-12, wobei ein Verteiler der Leistungsturbine einstellbare Schaufeln besitzt und wobei die Schaufeln in der Weise eingestellt werden, dass ein Auftreffwinkel des Abgases auf die Turbinenschaufeln derart ist, dass die Drehbewegung eines Laufrades der Leistungsturbine verlangsamt wird, wobei Bremsdrehmoment an die Fahrzeugkraftübertragung übertragen wird.

14. System nach Anspruch 13, wobei die Verarbeitungsmittel (ECU) konfiguriert sind, die Schaufelorientierung in der Weise zu steuern, dass die Leistungsturbine während des Aufwärmens des Reinigungssystems (ATS) und/oder unter Kraftmaschinenbremsbedingungen ein negatives Drehmoment erzeugen kann.

15. Steuerverfahren für ein verbessertes Turboverbundsystem nach einem der vorhergehenden Ansprüche, das den Schritt umfasst, bei dem die Brennkraftmaschine dazu veranlasst wird, ein dynamisches Gleichgewicht bei einer höheren Last aufgrund eines durch die Leistungsturbine erzeugten Gegendrucks zu finden, indem der Beitrag der Leistungsturbine wenigstens während des Schaltens verstärkt wird.

16. Verfahren nach Anspruch 15, wobei dann, wenn das Turboverbundsystem Kraftstoffnacheinspritzmittel (EJF) enthält, das Verfahren die folgenden Schritte umfasst:
- Befehlen wenigstens einer Kraftstoffnacheinspritzung, um eine fluiddynamische Last der Leistungsturbine (PT) zu erhöhen, und
- entsprechendes Verringern eines Effusionsquerschnitts der Leistungsturbine (PT), um eine mechanische Leistung, die durch die Leistungsturbine (PT) wiedergewonnen wird, zu erhöhen.

17. Verfahren nach Anspruch 15, wobei dann, wenn die Leistungsturbine einstellbare Schaufeln besitzt, das Steuerverfahren einen Schritt umfasst, bei dem eine Orientierung der Schaufeln in der Weise eingestellt wird, dass die Leistungsturbine während des Aufwärmens des Reinigungssystems (ATS) und/oder in einem Kraftmaschinenbremszustand Bremsdrehmoment erzeugt und an die Fahrzeugkraftübertragung überträgt.

18. Verfahren nach einem der vorhergehenden Ansprüche 15-17, wobei das Turboverbundsystem erste Mittel (EJU) umfasst, um gesteuert durch die Verarbeitungsmittel eine wässrige Lösung auf Harnstoffbasis in die Abgasleitung einzuspritzen, wobei dann die Verarbeitungsmittel dafür ausgelegt sind:
- wenigstens eine Veränderung der Einspritzung einer wässrigen Lösung auf Harnstoffbasis zu befehlen und
- einen Effusionsquerschnitt der Leistungsturbine (PT) entsprechend zu verringern,
um eine mechanische Leistung, die durch die Leistungsturbine (PT) wiedergewonnen wird, zu erhöhen.

19. Terrestrisches Fahrzeug, das ein verbessertes Turboverbundsystem nach einem der Ansprüche 1 bis 14 umfasst.

20. Computerprogramm, das Programmcodemittel enthält, die dafür ausgelegt sind, sämtliche Schritte nach einem der Ansprüche 15 bis 18 auszuführen, wenn ein solches Programm auf einem Computer läuft.

21. Computerlesbare Mittel, die ein aufgezeichnetes Programm enthalten, wobei die computerlesbaren Mittel Programmcodemittel enthalten, die dafür ausgelegt sind, sämtliche Schritte nach einem der Ansprüche 15 bis 18 auszuführen, wenn das Programm auf einem Computer läuft.

## Revendications

1. Système à turborécupération amélioré, le système comprenant :
- un moteur à combustion interne (E) ayant un collecteur d'échappement (Ex) et un conduit d'échappement (IL) raccordé et adjacent au collecteur d'échappement, le moteur à combustion interne étant équipé d'une boîte de vitesses, ayant un arbre de sortie secondaire (G1),
- un système de purification des gaz d'échappement (ATS) disposé sur ledit conduit d'échappement (IL),
- une turbine de puissance (PT) disposée sur le conduit d'échappement (IL) en aval dudit système de purification (ATS),
dans lequel la turbine de puissance (PT) présente un arbre respectif raccordé audit arbre de sortie secondaire (G1), en aval de la boîte de vitesses, afin de fournir un couple aux roues et d'éliminer les jeux de traction lors du changement de vitesse.

2. Système selon la revendication 1, comprenant en outre des moyens de traitement (ECU) configurés pour contrôler ledit moteur à combustion interne (E) afin d'augmenter une charge dynamique de fluide sur ladite turbine de puissance (PT), au moins quand ladite boîte de vitesses (G) change de rapport et/ou de coopérer avec ledit moteur à combustion interne (E).

3. Système selon l'une des revendications 1 et 2, dans lequel ledit système de purification (ATS) comprend des moyens (EJU) pour injecter une solution aqueuse à base d'urée contrôlée par lesdits moyens de traitement (ECU) et dans lequel lesdits moyens de traitement sont configurés de façon à augmenter un débit d'une solution aqueuse à base d'urée injectée dans l'ATS, afin d'augmenter une charge dynamique du fluide sur ladite turbine de puissance (PT), en réalisant un cycle de Rankine ouvert, au moins lorsque ladite boîte de vitesses (G) change de rapport et/ou de coopérer avec ledit moteur à combustion interne (E).

4. Système selon l'une des revendications 1 et 3, dans lequel ledit système de purification (ATS) comprend des moyens (EJF) pour injecter du carburant, contrôlé par lesdits moyens de traitement (ECU) et dans lequel lesdits moyens de traitement sont configurés de façon à commander une injection de carburant dans le (seul) ATS, afin d'augmenter une charge dynamique de fluide sur ladite turbine de puissance (PT), en réalisant un cycle de Bryton ouvert, au moins quand ladite boîte de vitesses (G) change de rapport et/ou de coopérer avec ledit moteur à combustion interne (E).

5. Système selon l'une des revendications précédentes 1 à 4, dans lequel ladite turbine de puissance (PT) a une géométrie variable, contrôlée par lesdits moyens de traitement (ECU) et dans lequel lesdits moyens de traitement (ECU) sont configurés de façon à réduire une section statique d'effusion à travers la turbine de puissance (PT) pour augmenter un couple d'entraînement fourni audit arbre secondaire (G1) de la boîte de vitesses (G).

6. Système selon l'une des revendications 1 à 5, dans lequel ledit axe de la turbine de puissance (PT) est opérationnellement raccordé à l'arbre propulseur secondaire de la boîte de vitesses (G1) au moyen d'engrenages appropriés ou au moyen d'un convertisseur de couple ou d'une boîte de vitesses CVT contrôlée par lesdits moyens de traitement (ECU).

7. Système selon la revendication 6, dans lequel ladite turbine de puissance est opérationnellement raccordée à l'arbre secondaire de la boîte de vitesses (G1) au moyen d'une boîte de vitesses CVT contrôlée par lesdits moyens de traitement (ECU), lesdits moyens de traitement sont configurés de façon à contrôler ladite boîte de vitesses CVT, de sorte que la vitesse de rotation de la turbine soit telle que son efficacité soit optimale.

8. Système selon l'une quelconque des revendications précédentes, dans lequel ledit système de purification des gaz d'échappement (ATS) comprend
- un filtre à particules (DPF) et lesdits moyens (EJF) pour injecter du carburant disposés en amont dudit filtre à particules et/ou
- un catalyseur SCR et lesdits moyens (EJU) pour injecter une solution aqueuse à base d'urée disposés en amont dudit catalyseur SCR, et/ou
- en séquence, en partant dudit collecteur d'échappement, selon une direction d'effusion des gaz d'échappement :
- des moyens (EJF) pour injecter du carburant,
- un catalyseur DOC,
- un filtre à particules (DPF),
- des moyens (EJU) pour injecter une solution aqueuse à base d'urée,
- un catalyseur SCR.

9. Système selon l'une quelconque des revendications précédentes, dans lequel ledit moteur à combustion interne (E) est en outre doté d'un collecteur d'admission et d'une unité turbocompresseur (T, C), ayant une première turbine (T) disposée en aval du collecteur d'échappement (Ex) et en amont dudit système de purification (ATS).

10. Système selon l'une quelconque des revendications précédentes, dans lequel ledit moteur à combustion interne (E) est en outre doté de moyens EGR et dans lequel lesdits moyens de traitement (ECU) sont adaptés pour contrôler ladite turbine de puissance, afin de faciliter une recirculation des gaz d'échappement.

11. Système selon la revendication 10, dans lequel lesdits moyens EGR sont à haute pression ou à basse pression.

12. Système selon l'une des revendications précédentes, dans lequel ladite boîte de vitesses (G) est automatique ou automatisable et/ou dans lequel ladite turbine de puissance (PT) est associée audit arbre de boîte de vitesses secondaire (G1) au moyen d'une prise de puissance (G2) de la boîte de vitesses.

13. Système selon l'une quelconque des revendications précédentes 1 à 12, dans lequel un distributeur de ladite turbine de puissance a des pales ajustables et dans lequel les pales peuvent être ajustées de sorte qu'un angle d'impact du gaz d'échappement sur les pales de la turbine soit tel qu'il ralentisse le mouvement de rotation d'un rotor de la turbine de puissance, en transférant un couple de freinage à la transmission du véhicule.

14. Système selon la revendication 13, dans lequel lesdits moyens de traitement (ECU) sont configurés pour contrôler l'orientation de la pale, de sorte que la turbine de puissance puisse générer un couple négatif pendant le préchauffage du système de purification (ATS) et/ou dans des conditions de freinage du moteur.

15. Méthode de contrôle d'un système à turborécupération amélioré selon l'une quelconque des revendications précédentes, comprenant l'étape consistant à faire en sorte que le moteur à combustion interne trouve un équilibre dynamique à une charge supérieure due à une contre-pression générée par la turbine de puissance, en amplifiant la contribution de la turbine de puissance au moins pendant un changement de rapport.

16. Méthode selon la revendication 15, dans laquelle, si le système à turborécupération comprend des moyens de post-injection de carburant (EJF), la méthode comprend les étapes consistant à
- commander au moins une post-injection de carburant pour augmenter une charge dynamique de fluide de la turbine de puissance (PT), et
- réduire une section d'effusion de la turbine de puissance (PT) en conséquence,
afin d'augmenter une puissance mécanique récupérée par la turbine de puissance (PT).

17. Méthode selon la revendication 15, dans laquelle, quand la turbine de puissance a des pales ajustables, la méthode de contrôle comprenant une étape consistant à ajuster une orientation des pales de sorte que la turbine de puissance génère et transfère le couple de freinage à la transmission du véhicule pendant le préchauffage du système de purification (ATS) et/ou en condition de freinage du moteur.

18. Méthode selon l'une quelconque des revendications précédentes 15 à 17, dans laquelle le système à turborécupération comprend des premiers moyens (EJU) pour injecter une solution aqueuse à base d'urée dans ledit conduit d'échappement et contrôlés par lesdits moyens de traitement, lesdits moyens de traitement étant alors adaptés pour
- commander au moins une variation de l'injection d'une solution aqueuse à base d'urée, et
- réduire une section d'effusion de la turbine de puissance (PT) en conséquence,
afin d'augmenter une puissance mécanique récupérée par la turbine de puissance (PT).

19. Véhicule terrestre comprenant un système à turborécupération amélioré, selon l'une quelconque des revendications 1 à 14.

20. Programme informatique comprenant des moyens de codage de programme adaptés pour effectuer toutes les étapes selon l'une quelconque des revendications 15 à 18, quand ledit programme est exécuté sur un ordinateur.

21. Moyens lisibles sur ordinateur comprenant un programme enregistré, lesdits moyens lisibles sur ordinateur comprenant des moyens de codage de programme adaptés pour exécuter toutes les étapes selon l'une quelconque des revendications 15 à 18, quand ledit programme est exécuté sur un ordinateur.
